# EUROPEAN PATENT SPECIFICATION

(11) **EP 2 774 830 B1**
(45) Date of publication and mention of the grant of the patent: **18.07.2018**
(21) Application number: 12840134.6
(22) Date of filing: 15.10.2012
(51) Int. Cl.: B62D 61/12, B60G 9/00

(54) **SYSTEM FOR CONNECTING A LIFTING DEVICE TO THE SUSPENSION BRACKET OF A VEHICLE**
SYSTEM ZUM ANSCHLUSS EINER HEBEVORRICHTUNG AN DIE AUFHÄNGEKONSOLE EINES FAHRZEUGS
SYSTÈME DESTINÉ À JOINDRE UN DISPOSITIF ÉLÉVATEUR AU SUPPORT DE SUSPENSION D'UN VÉHICULE

(30) Priority: 14.10.2011 ES 201131655
(43) Date of publication of application: 10.09.2014
(73) Proprietor: Accesorios y Elevadores Valencia, S.L., 46530 Puzol (Valencia) (ES)
(72) Inventor: MORENO IBÁÑEZ, Alberto, E-46530 Puzol (Valencia) (ES)
(74) Representative: Isern Patentes y Marcas S.L.
(86) International application number: PCT/ES2012/000294
(87) International publication number: WO 2013/053963

(56) References cited:
- EP-A1- 0 941 915
- ES-T3- 2 276 032
- ES-T3- 2 309 981
- ES-U- 1 029 832
- ES-U- 1 051 061

## Description

### OBJECT OF THE INVENTION

The present invention relates to a novel system for connecting a lifting bracket to the suspension bracket of a vehicle without needing to remove any elements from the suspension of the vehicle, in an inexpensive manner and with great ease of assembly, simplicity, speed and reliability. The document EP 0941915 discloses a known axle lifting device.

### BACKGROUND OF THE INVENTION

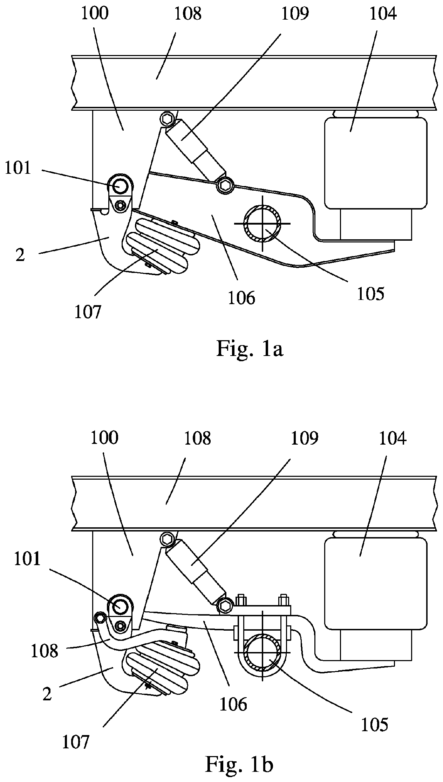

In order to establish the number of wheels of a vehicle that are in contact with the ground at all times, lifting devices are known that allow the lifting and subsequent lowering of the wheel axles. These lifting devices are used more frequently in trailers and semi-trailers of articulated vehicles with pneumatic suspension, and have two known basic configurations that are shown in Figures 1a and 1b.

Figure 1a shows the first configuration, which shows how the vehicle chassis (108) is supported on the suspension air spring (104) and the suspension bracket (100). In turn, a rigid suspension arm (106) has an end coupled to a suspension bolt such that it can pivot therearound with the opposite end resting on the aforementioned suspension air spring (104). The vehicle axle (105) is located on the suspension arm (106). This configuration further comprises a shock absorber (109) installed between the suspension arm (106) and the base of the suspension bracket (100).
The lifting device enabling the axle (105) to be lifted/lowered is typically installed later, and is formed primarily by the lifting bracket (2) and the lifting air spring (107). The lifting bracket (2) has one end coupled to the head (101) of the suspension bolt and supported at the bottom of the suspension bracket (100), while the opposite end is connected to the pneumatic lifting air spring (107). The lifting air spring (107) is, in turn, coupled to the underside of the suspension arm (106). Thus, if it were necessary to raise the vehicle axle (105), it would suffice to inject pressurised air into the lifting air spring (107), which, in turn, moves the suspension arm (106) up, resulting in the axle (105) being lifted.

Figure 1b shows the second known configuration, which is similar to the first except for the fact that the suspension arm (106), in this case, is much thinner than the former, thereby exerting a leaf-spring suspension. In addition, the lifting air spring (107) of this second configuration is not anchored to the underside of the suspension arm (106), but rather it is only supported by an additional part known as an upper bracket (108).

A technical problem common to both configurations is that of establishing a connection system to secure the lifting bracket (2) to the suspension bracket (100) of the vehicle completely rigidly, avoiding any rotation movement between the two elements. In addition, it needs to be practically impossible to separate it, both by stresses inherent in operating the lifting device and by any external impact, since breaking this locking system can cause significant damage on colliding with other vehicles, given its robustness and dimension.

An additional factor to consider is the ease of assembly, as this lifting device must be attached to the suspension mechanism that is already installed in the vehicle, adapting its structure without the need to handle any elements thereof and as quickly as possible.

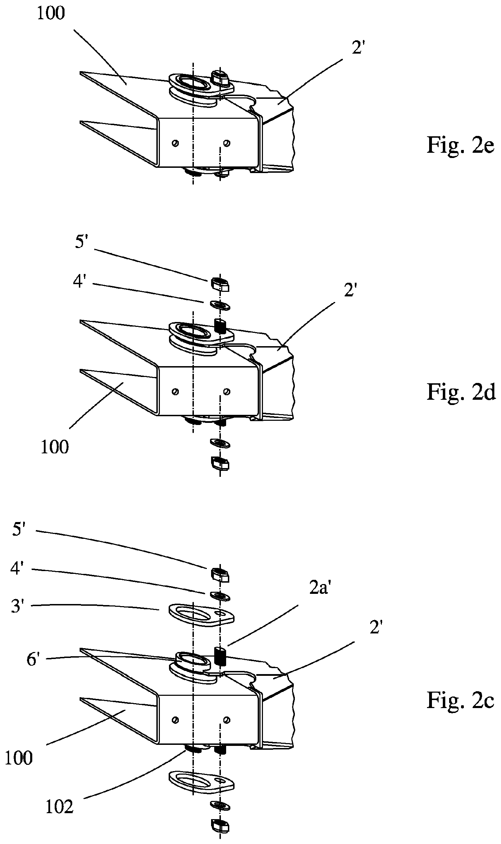

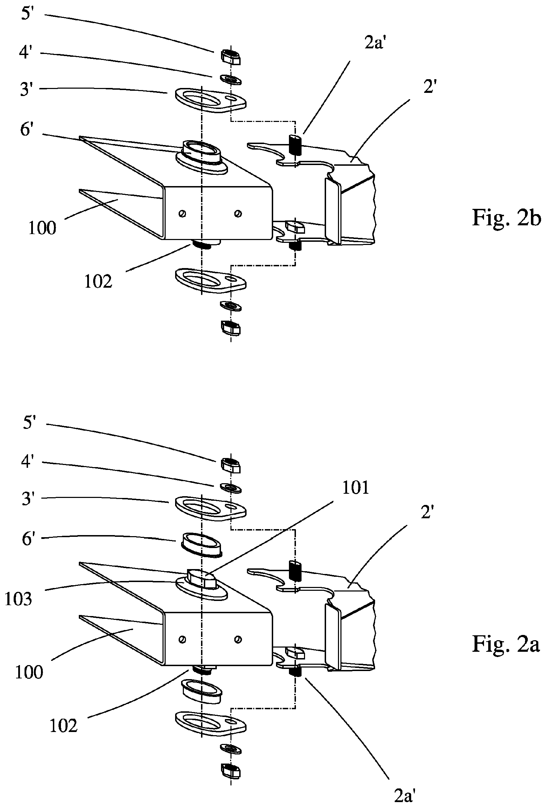

In order to comply these requirements, the applicants herein have manufactured and marketed a connection system between the lifting bracket (2) and the suspension bracket (100) since 2008, using the configuration shown in Figures 2a- e, wherein the different assembly instructions are shown. Reference numbers (100) and subsequent numbers have been used to reference parts of the vehicle suspension in these figures and also in previous figures. In addition, the same reference numbers have been used to refer to corresponding parts between the system of the invention and the system of the prior art, while adding an apostrophe (') to denote those belonging to the prior art.

Therefore, Figures 2a- 2b show the first step for connection according to the prior art consisting of placing a number of anchor bushings (6') on the hexagonal nut (102) and head (101) of the suspension bolt. The bushing (103) of the suspension bracket has also been shown, arranged under the head (101) of the bolt. The bushings (6') provide a locking function, preventing rotational movement between the lifting bracket (2') and the anchor plates (3'), thereby preventing any unwanted movements.

Below, as shown in Figures 2b-2c , the free ends of the lifting bracket (2') are presented, having a semicircular shape, such that they are in contact with the lower portion of the anchor bushings (6').

Thirdly, in Figures 2c-2d, the lateral placement of anchor plates (3'), which constitute the intermediate components for connecting the suspension bracket (100) and the lifting bracket (2') can be seen. The plates (3') have two orifices, one upper orifice with a larger diameter to house the anchor bushing (6') which supports the suspension, and another lower orifice smaller in diameter which houses the anchor bolt (2a') located on the outer face of the free ends of the lifting bracket (2').

Finally, a nut (5') is fitted, optionally with a washer (4'), on the anchor bolts (2a'), as seen in Figures 2d-2e.

### DESCRIPTION OF THE INVENTION

The present invention describes a connection system which is simpler as it uses an anchor plate with a modified shape, complementary to the shape of a step on the anchor plate, thereby avoiding the use of the anchoring bushings (6'). This novel form of anchor plate also avoids the need for the free ends of the lifting bracket to have a semicircular shape, and can be straight. This provides significant cost savings as it dispenses with the precision machining process previously required to confer the semicircular shape to said free ends.

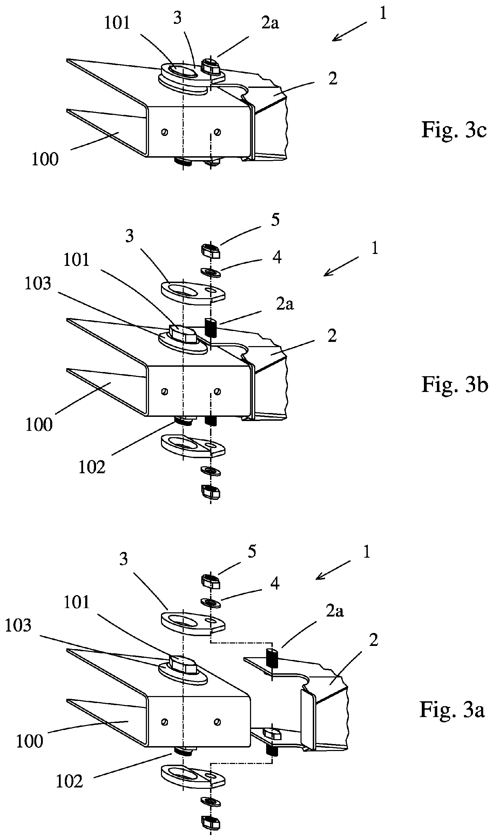

In the document herein, the term "substantially oval" applied to the anchor plate should be understood as intended to encompass many possible shapes, all having two orifices housed inside in common: a first orifice and a second smaller orifice, normally smaller in diameter than the first. Therefore, the oval shape may consist of a shape formed by circular parts and straight parts adapted to surround the two orifices (for example, the shape shown in Figures 3a-3c), or a substantially rectangular shape, substantially trapezoidal shape, with rounded edges, etc. Furthermore, for the purpose of describing the geometric characteristics of the anchor plate, we will say that its larger axis is substantially parallel to the suspension bracket and the lifting bracket, while the smaller axis is substantially perpendicular thereto.

Furthermore, "connection end" shall refer to the end of the lifting bracket which is intended for connection to the vehicle suspension bracket, to differentiate it from the opposite end that is coupled to the lifting air spring.
Therefore, the system of the invention comprises an anchor plate substantially oval in shape, and comprising:
- A step-shaped recess, substantially perpendicular to its larger axis on one of its surfaces.
- A first and second orifice situated along said larger axis.-{}-

In addition, the connection end of the lifting bracket has a complementary shape to the recess or step of the anchor plate. In this context , the shape of the recess "substantially perpendicular to the larger axis" refers to a step whose direction is predominantly perpendicular to the larger axis, but which may include inward and outward angles of various shapes to increase the contact area between the plate and bracket. Note that this surface is designed for fitting in to the edge of the connection end of the lifting bracket, which has a complementary shape, to prevent the relative rotation between the lifting bracket (2) and anchor plates (3) around the anchor bolt (2a). For example, in a preferred embodiment of the invention, the recess of the plate and the connection end of the lifting bracket are straight.

Therefore, the anchor plate is installed such that the recess fits in to the connection end of the lifting bracket, the first opening housing a member projecting from the suspension bracket, while the second orifice houses a number of anchor bolts for the lifting bracket. The protruding member of the suspension bracket can be the bolt nut, the bolt head, the bushings of the suspension bracket, or a combination thereof. The recess is attached to the connection end of the lifting bracket, thereby preventing any relative rotational movement between said plate and the lifting bracket. A washer and a nut are coupled to the anchor bolts of the lifting bracket to completely immobilise the assembly.

In addition, as the bolt nut of the suspension bracket has a larger diameter than the anchor bolts of the lifting bracket, usually the first orifice of the anchor plate has a larger diameter than the second orifice.

This novel lifting device has significant advantages in respect of the prior art:
- Manufacturing the lifting bracket is simplified, since no laser machining is required at the free ends to configure them as a semicircular Y shape.
- Anchoring bushings are removed as locking devices.
- The lifting bracket and the anchor plate can be coupled directly, this being made possible through the use of the step on the latter, which facilitates the stress absorption of the lifting device by the suspension mechanism of the vehicle without the need to use intermediate components, such as anchoring bushings.
- Ease and speed of assembly is provided, as there are fewer components that make up the device.

### BRIEF DESCRIPTION OF THE FIGURES

Figures 1a and 1b show both known embodiments of suspensions and lifting devices.
Figures 2a-2e show the method for assembling a connection system of the prior art.
Figures 3a-3c show the method for assembling a connection system according to the invention herein.
Figure 4 shows an exploded diagram of the system of the invention herein.

### PREFERRED EMBODIMENT OF THE INVENTION

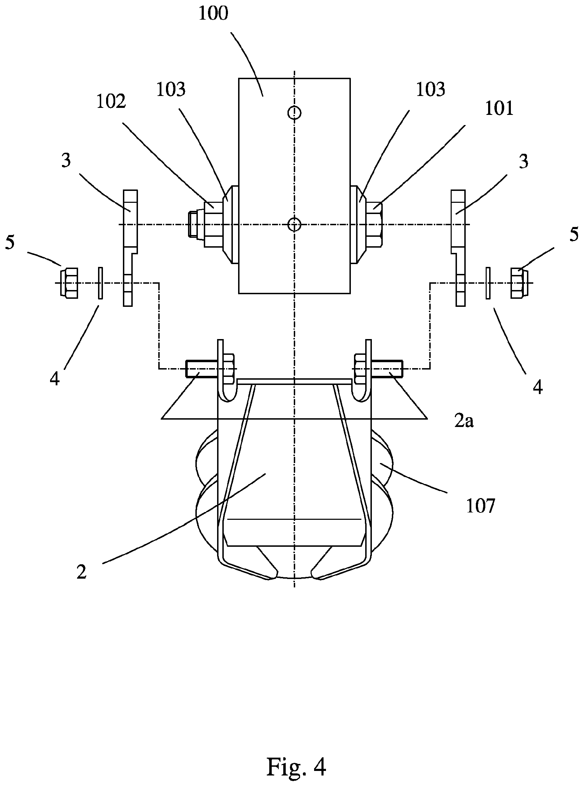

Described below is a particular embodiment of the invention with reference to the accompanying Figures 3a-3c and 4. Figures 3a-3c show an example of the process for assembling a lifting device equipped with a connection system (1) according to the invention herein.

In particular, Figure 3a shows the suspension bracket (100) of the vehicle with the nut (102) of the bolt, the head (101) of the bolt and the bushing (103) of the vehicle suspension bracket installed in the initial state, namely, still unconnected to the lifting bracket (2). Although not shown in this figure, it is understood that the lifting bracket (2) has a lifting air spring (107) at its other end, supported or coupled to the suspension arm (106) of the vehicle. The parts that make up the system (1) of the invention have, however, been shown in this figure: the lifting bracket (2), the anchor plate (3), the washer (4) and the nut (5). Note, as clearly seen, that the connection end of the lifting bracket (2) is straight.

Figure 3b shows how the lifting bracket (2) has moved to rest on the suspension bracket (100) of the vehicle. As shown in this position the anchor bolts (2a) of the lifting bracket are facing the second orifice of the anchor plate (3), while the head (101) of the bolt is facing the first orifice of the anchor plate (3).

Hereafter, Figure 3c shows the system (1) in an assembled state, with the anchor plate (3) placed in position, namely, with the straight step end resting on the edge of the straight end of the lifting bracket (2). It can be seen how, in this example, the first orifice of the anchor plate (3) houses the head (101) of the bolt on one side and the nut (102) of the bolt on the other. Finally, the assembly is solidly secured by means of the washer (4) and the nut (5).

Although the recess of the anchor plate (3) cannot be clearly seen in Figures 3a-3c, which is straight in this example, Figure 4 shows a longitudinal section of said plate (3) where it is easy to see how said straight recess fits into the straight end of the suspension bracket (2) once the plate (3) has been installed.

## Claims

1. A system (1) for attaching a lifting bracket (2) to the suspension bracket of a vehicle (100), **characterised in that** it comprises an anchor plate (3) having an essentially oval shape comprising a recess in the form of a step, substantially perpendicular to its larger axis on one side, and a first and second orifice positioned along said larger axis, and wherein the connection end of the lifting bracket (2) has a shape complementary to the shape of the recess of the anchor plate (3), said anchor plate (3) being installed such that the recess fits with the connection end of the lifting bracket (2), the first orifice housing a member projecting from the suspension bracket (100) and the second orifice housing a number of anchor bolts (2a) for the lifting bracket (2).

2. A system (1) according to claim 1, wherein the protruding member of the suspension bracket that is housed in the first orifice of the anchor plate (3) comprises the nut (102) of the suspension bolt, the head (101) of the suspension bolt or the bushings (103) of the suspension bracket, or combinations thereof.

3. A system (1) according to any of the preceding claims, wherein the recess of the anchor plate (3) and the connection end of the lifting bracket (2) are straight.

4. A system (1) according to any of the preceding claims, wherein the diameter of the first orifice is larger than the second orifice.

## Patentansprüche

1. System (1) zur Befestigung einer Hebevorrichtung (2) am Aufhängebügel eines Fahrzeugs (100), **dadurch gekennzeichnet, dass** es eine Ankerplatte (3) mit einer im Wesentlichen ovalen Form aufweist, umfassend eine Auskehlung in Form einer Stufe, im Wesentlichen senkrecht zu ihrer grösseren Achse, auf der einen Seite, sowie eine erste und zweite Öffnung, die entlang der besagten grösseren Achse angeordnet sind, und wobei das Verbindungsende der Hebevorrichtung (2) eine Form aufweist, die komplementär zur Form der Auskehlung der Ankerplatte (3) ist, wobei besagte Ankerplatte (3) derart eingerichtet ist, dass die Auskehlung an das Verbindungsende der Hebevorrichtung (2) angepasst ist, wobei in der ersten Öffnung ein Element aufgenommen ist, das vom Aufhängebügel (100) hervorsteht, und in der zweiten Öffnung eine Anzahl von Ankerbolzen (2a) für die Hebevorrichtung (2) aufgenommen sind.

2. System (1) gemäss Anspruch 1, wobei das hervorstehende Element des Aufhängebügels, das in der ersten Öffnung der Ankerplatte (3) aufgenommen ist, die Mutter (102) des Aufhängebolzens, das Kopfstück (101) des Aufhängebolzens oder die Buchsen (103) des Aufhängebügels, oder Kombinationen derselben umfasst.

3. System (1) gemäss einem der vorhergehenden Ansprüche, wobei die Auskehlung der Ankerplatte (3) und das Verbindungsende der Hebevorrichtung (2) gerade sind.

4. System (1) gemäss einem der vorhergehenden Ansprüche, wobei der Durchmesser der ersten Öffnung grösser ist als die zweite Öffnung.

## Revendications

1. Système (1) destiné pour la fixation d'un dispositif élévateur (2) au support de suspension d'un véhicule (100), **caractérisé en ce qu'**il comprend une plaque d'ancrage (3) qui présente une forme essentiellement ovale, comprenant une cavité dans la forme d'un cran, sustantiellement perpendiculaire par rapport à son axe le plus grand sur un côté, ainsi qu'un premier et deuxième orifice positionnés le long de cet axe plus grand, et dans lequel l'extrémité de raccordement du dispositif élévateur (2) présente une forme complémentaire à la forme de la cavité de la plaque d'ancrage (3), dans lequel ladite plaque d'ancrage (3) est installée de telle manière que la cavité est adaptée à l'extrémité de raccordement du dispositif élévateur (2), dans lequel le premier orifice loge un élément qui fait saillie du support de suspension (100) et le deuxième orifice loge un numéro de boulons d'ancrage (2a) pour le dispositif élévateur (2).

2. Système (1) suivant la revendication 1, dans lequel l'élément saillant du support de suspension qui est logé dans le premier orifice de la plaque d'ancrage (3) comprend l'écrou (102) du boulon de suspension, la tête (101) du boulon de suspension ou les douilles (103) du support de suspension, ou des combinaisons de ceux-ci.

3. Système (1) suivant une quelconque des revendications précédentes, dans lequel la cavité de la plaque d'ancrage (3) et l'extrémité de raccordement du dispositif élévateur (2) sont droites.

4. Système (1) suivant une quelconque des revendications précédentes, dans lequel le diamètre du premier orifice est plus grand que le deuxième orifice.
